# FASCICULE DE BREVET EUROPEEN

(11) **EP 3 011 361 B1**
(45) Date de publication et mention de la délivrance du brevet: **12.06.2019**
(21) Numéro de dépôt: 14739883.8
(22) Date de dépôt: 17.06.2014
(51) Int. Cl.: G01S 13/88, G01V 8/00, G01S 13/89

(54) **DISPOSITIF D'IMAGERIE HYPERFREQUENCE PORTABLE, SYSTEME COMPRENANT UN TEL DISPOSITIF ET PROCEDE D'IMAGERIE CORRESPONDANT**
TRAGBARE MIKROWELLENFREQUENZ-BILDGEBUNGSVORRICHTUNG, SYSTEM MIT SOLCH EINER VORRICHTUNG UND ZUGEHÖRIGES BILDGEBUNGSVERFAHREN
PORTABLE MICROWAVE FREQUENCY IMAGING DEVICE, SYSTEM COMPRISING SUCH A DEVICE AND CORRESPONDING IMAGING METHOD

(30) Priorité: 18.06.2013 FR 1355722
(43) Date de publication de la demande: 27.04.2016
(73) Titulaire: Microwave Characterization Center, 59262 Sainghin en Melantois (FR)
(72) Inventeur: VELLAS, Nicolas, F-62136 Richebourg (FR); THOUVENIN, Nicolas, F-59155 Faches-Thumesnil (FR); GAQUIERE, Christophe, F-59650 Villeneuve D'ascq (FR); JONNIAU, Sylvain, F-59170 Croix (FR); CLEMENCE, Florent, F-59285 Buysscheure (FR); WERQUIN, Matthieu, F-59113 Seclin (FR)
(74) Mandataire: Balesta, Pierre
(86) Numéro de dépôt international: PCT/FR2014/051499
(87) Numéro de publication internationale: WO 2014/202895

(56) Documents cités:
- FR-A1- 2 945 121
- US-A- 5 886 664
- US-A1- 2012 026 336
- US-A1- 2013 021 192
- US-B2- 7 973 704

## Description

La présente invention concerne un dispositif d'imagerie portable, un système comprenant un tel dispositif et un procédé d'imagerie correspondant. La présente invention concerne notamment l'imagerie hyperfréquence, et en particulier l'imagerie radiométrique.

L'invention a notamment pour but de permettre la détection d'objets portés par des passagers ou contenus dans des bagages, de manière fiable et aisée.

Les exigences de sécurité ont été accrues avec l'augmentation des risques, notamment d'attentat. Un certain nombre de systèmes de détection ont ainsi été développés ou sont en cours de développement pour répondre à ces exigences.

Il existe ainsi des systèmes actifs permettant de faire des images à des distances inférieures à 1 mètre. De tels systèmes, par exemple des portiques d'aéroport, utilisent la radiométrie afin de détecter n'importe quels objets (métalliques ou non) portés par des passagers, notamment sous les vêtements, avec une résolution inférieure à 1 cm. De tels systèmes comprennent un nombre de capteurs élevé associés à un système de balayage permettant de balayer (en anglais : « to scan ») complètement une personne en un minimum de temps et à courtes distances. Cependant, de tels dispositifs sont volumineux et peuvent être difficilement déplacés.

Il existe également des systèmes mobiles passifs permettant de faire des images à des distances inférieures à environ 10 mètres. De tels systèmes sont transportables et permettent de visualiser des objets cachés par des personnes sous leurs vêtements avec une résolution allant de 1 à 10 cm, voire de balayer le contenu d'un bagage laissé sans surveillance. De tels systèmes comprennent un nombre de capteurs beaucoup moins élevé que celui des systèmes actifs décrits précédemment, et sont associés à un système de balayage mécanique permettant de balayer une surface plus ou moins importante. Cependant, de tels systèmes, bien que transportables, restent contraignants à déplacer, ce qui augmente la durée d'intervention sur un lieu distant.

Ainsi, il n'existe pas de dispositif de détection portable, notamment d'une seul main, permettant de balayer les vêtements portés par un individu ou bien encore de cartographier rapidement le contenu de bagages laissés sans surveillance dans un lieu public tel qu'une gare ou un aéroport.

Cependant, le développement d'un tel dispositif nécessite de répondre à des exigences incompatibles entre elles, telles qu'une résolution spatiale élevée d'une part et un facteur de bruit du capteur faible ou une profondeur de détection élevée d'autre part, ou bien encore un système optique compact et léger d'une part, et une consommation électrique faible ou des pertes thermiques faibles d'autre part.

Le document US 5 886 664 décrit un système d'acquisition et d'affichage de données radiométriques. Le système a un ensemble détecteur avec une flèche. Un radiomètre est connecté à une extrémité de la flèche. Le radiomètre comporte une tête de capteur comprenant un cornet d'antenne pour acquérir des données radiométriques à partir d'une zone d'intérêt. Un télémètre est construit et agencé pour fournir des données de localisation indicatives d'une position de la tête de capteur, et un processeur de données est connecté pour recevoir les données de localisation provenant du télémètre et les données radiométriques provenant du radiomètre. Le processeur de données comprend un circuit de traitement de signal et un affichage connecté à l'ordinateur.

Le document US 2012/26336 décrit un procédé et un système d'intégration améliorée d'imagerie par ondes millimétriques. Le procédé comprend la réalisation d'un premier balayage par onde millimétrique d'une cible, et le traitement du premier balayage pour générer des images par ondes millimétriques de la cible. De plus, le procédé comprend le traitement d'un second balayage par ondes millimétriques de la cible lorsque la cible est immobile, et l'intégration du premier balayage et du second balayage pour augmenter une résolution de l'imagerie par ondes millimétriques.

### Objet et résumé de l'invention

La présente invention vise à résoudre les différents problèmes techniques énoncés précédemment. En particulier, la présente invention vise à proposer un dispositif portable permettant d'obtenir la profondeur de pénétration, la résolution spatiale, la taille et la consommation électrique voulues.

Ainsi, la présente invention vise à proposer un dispositif de détection permettant de visualiser des objets à travers différents matériaux (comme par exemple les plastiques, papiers, tissus, bois, ...), présentant une résolution spatiale inférieure à 1 mètre, de préférence inférieure à 50 cm et plus préférentiellement inférieure à 2 cm, présentant une masse inférieure à 5 kg, de préférence inférieure à 3 kg et plus préférentiellement inférieure à 1 kg, ayant une vitesse de reconstitution de l'image élevée et une consommation électrique faible.

Ainsi, selon un aspect, il est proposé un dispositif d'imagerie portable, notamment à balayage manuel, comprenant un bâti et au moins un capteur hyperfréquence, de préférence radiométrique, monté dans le bâti. Le capteur hyperfréquence est configuré pour capter des rayonnements électromagnétiques émis ou réfléchis par un corps ou objet dans une zone de détection du capteur hyperfréquence, et pour les transformer en un premier signal représentatif desdits rayonnements. Le dispositif comprend également :
- un premier moyen de connexion pour connecter le dispositif d'imagerie à un moyen de mesure de déplacement, le moyen de mesure de déplacement étant configuré pour délivrer un deuxième signal représentatif du déplacement de la zone de détection, et
- un deuxième moyen de connexion pour connecter le dispositif d'imagerie à une unité de traitement, l'unité de traitement recevant en entrée le premier signal et le deuxième signal, et étant configurée pour former, et éventuellement afficher sur un afficheur, une image hyperfréquence constituée par des pixels.

Lors d'un déplacement du bâti pour balayer des points d'un corps ou objet par la zone de détection, l'unité de traitement est configurée pour former, et éventuellement afficher, de manière itérative, ladite image hyperfréquence en :
- détectant, à partir du deuxième signal, un déplacement déterminé de la zone de détection entre une première position et une deuxième position,
- ajoutant un pixel supplémentaire dans l'image hyperfréquence, positionné par rapport au pixel précédent en fonction dudit déplacement détecté, et
- donnant audit pixel supplémentaire une valeur du premier signal déterminée lorsque la zone de détection est dans la deuxième position.

En particulier, l'unité de traitement est configurée pour modifier la taille, et éventuellement la position, des pixels de l'image, lors d'ajouts d'un pixel supplémentaire.

Ainsi, grâce à l'utilisation d'un moyen de mesure de déplacement, il est possible de reconstituer une image hyperfréquence à partir des signaux fournis par le ou les capteurs. En particulier, les différentes mesures réalisées par le capteur sont utilisées pour former, chacune, un pixel différent de l'image hyperfréquence, les pixels étant positionnés les uns par rapport aux autres grâce aux données du moyen de mesure du déplacement.

Les pixels déjà affichés deviennent ainsi plus petits au fur et à mesure du balayage, et sont redisposés dans l'image en fonction de la position des pixels supplémentaires ajoutés.

On entend par capteur hyperfréquence, et en particulier par capteur radiométrique, un capteur capable de mesurer des fréquences électromagnétiques comprises entre 107 Hz et 10¹⁴ Hz, de préférence entre 10⁹ Hz et 10¹³ Hz.

Préférentiellement, le dispositif comprend entre un et dix capteurs hyperfréquences, de préférence un unique capteur hyperfréquence. L'utilisation d'un moyen de mesure du déplacement permet de reconstruire une image à partir d'un nombre limité de capteurs. En particulier, l'utilisation d'un nombre réduit de capteurs, et notamment d'un unique capteur, permet d'obtenir un gain en poids du dispositif ainsi qu'une économie en termes d'énergie.

Préférentiellement, le capteur hyperfréquence est un capteur radiométrique. Dans ce cas, l'image hyperfréquence pourra également être désignée par « image radiométrique ».

Préférentiellement, le déplacement du bâti pour balayer des points d'un corps ou objet par la zone de détection comprend un déplacement manuel. L'utilisation d'un moyen de mesure de déplacement permet de s'affranchir d'un moyen de balayage mécanique complexe, lourd et encombrant. Le dispositif d'imagerie est ainsi déplacé à la main, par l'opérateur, de manière à ce que la zone de détection du capteur balaye le corps ou l'objet à contrôler.

Préférentiellement, le moyen de mesure de déplacement comprend une centrale inertielle. La centrale inertielle peut comprendre trois gyroscopes, trois accéléromètres et trois magnétomètres, afin de mesurer des déplacements et des rotations dans les trois directions de l'espace, et ainsi déterminer en temps réel la position de la zone de détection du capteur sur le corps ou objet balayé.

Préférentiellement, le deuxième signal correspond à un déplacement du capteur, et notamment d'une antenne de détection du capteur.

Préférentiellement, le premier et le deuxième moyen de connexion forment un unique moyen de connexion. L'unique moyen de connexion permet alors de connecter le dispositif d'imagerie portable à un dispositif externe comprenant un moyen de mesure du déplacement et une unité de traitement, par exemple un ordinateur embarqué dans un téléphone ou ordiphone (en anglais : « smartphone »). Le dispositif externe est de préférence monté solidaire du bâti du dispositif d'imagerie, afin que le moyen de mesure du déplacement du dispositif externe puisse mesurer les déplacements du capteur du dispositif d'imagerie.

Préférentiellement, le bâti comprend également une caméra configurée pour capter les rayonnements visibles émis ou réfléchis dans la zone de détection et pour les transformer en un troisième signal représentatif desdits rayonnements, et l'unité de traitement est configurée pour : former une image visible correspondant au troisième signal, superposer l'image hyperfréquence et l'image visible, et éventuellement modifier une partie de ladite image hyperfréquence. L'image visible est utilisée, en combinaison avec l'image hyperfréquence, pour améliorer la détection des objets cachés et/ou prévenir des abus d'utilisation et protéger la dignité des personnes. L'image hyperfréquence pourra alors être utilisée pour détecter les objets et sera superposée avec l'image visible.

Préférentiellement, le déplacement déterminé est sensiblement égal à la dimension de la zone de détection.

Selon un mode de réalisation, le capteur est configuré pour capter un rayonnement collimaté et la dimension de la zone de détection est égale à la dimension du rayonnement collimaté.

Selon un autre mode de réalisation, le bâti ou le moyen de mesure de déplacement comprend en outre un moyen de mesure de la distance entre le capteur hyperfréquence et le corps ou objet, et la dimension de la zone de détection est déterminée en fonction de la distance mesurée entre le capteur hyperfréquence et le corps ou objet. Afin de connaître la dimension de la zone de détection dans le cas d'un rayonnement focalisé, il est nécessaire de connaître la distance entre le corps ou l'objet et le capteur. Le capteur peut être un capteur infra-rouge ou tout autre capteur de distance.

Préférentiellement, l'unité de traitement est montée dans le bâti.

Préférentiellement, le moyen de mesure de déplacement est monté dans le bâti.

En particulier, en intégrant dans le dispositif d'imagerie l'unité de traitement, le moyen de mesure de déplacement et éventuellement un moyen d'affichage, il devient possible d'obtenir un dispositif d'imagerie complet et autonome, pouvant être utilisé directement et rapidement par un opérateur.

Selon un autre aspect, l'invention concerne également un système d'imagerie comprenant un dispositif d'imagerie tel que décrit précédemment, une unité de traitement et un moyen de mesure du déplacement du capteur. Selon cet autre aspect, l'unité de traitement et le moyen de mesure de déplacement peuvent être distincts du dispositif d'imagerie.

Préférentiellement, le moyen de mesure du déplacement du capteur et/ou l'unité de traitement est monté dans un ordinateur, éventuellement portable, ou un téléphone portable. Afin de limiter la consommation électrique du dispositif d'imagerie due aux traitements informatiques des informations, l'unité de traitement peut être distincte du dispositif d'imagerie. Dans ce cas, les données sont envoyées à l'unité de traitement par un câble ou une liaison sans fil (de type Wifi ou Bluetooth) et les données traitées sont renvoyées au dispositif d'imagerie pour permettre son affichage par exemple.

Selon un autre aspect, l'invention concerne également un procédé d'imagerie hyperfréquence à balayage, notamment manuel, comprenant :
- une étape d'acquisition de rayonnements électromagnétiques hyperfréquences émis par un corps ou objet dans une zone de détection, pour délivrer un premier signal représentatif desdits rayonnements,
- une étape de mesure de déplacement pour délivrer un deuxième signal représentatif du déplacement de la zone de détection,
- une étape de formation, à partir du premier signal et du deuxième signal, d'une image hyperfréquence constituée par des pixels, destinée à être affichée par un afficheur.

En particulier, pendant un balayage des points d'un corps ou objet par la zone de détection, on forme, et éventuellement affiche, progressivement, de manière itérative, ladite image hyperfréquence en :
- détectant, à partir du deuxième signal, un déplacement déterminé de la zone de détection entre une première position et une deuxième position,
- ajoutant un pixel supplémentaire dans l'image hyperfréquence, positionné par rapport au pixel précédent en fonction dudit déplacement détecté, et
- donnant audit pixel supplémentaire une valeur du premier signal lorsque la zone de détection est dans la deuxième position.

En particulier, on modifie la taille, et éventuellement la position, des pixels de l'image, lors d'ajout d'un pixel supplémentaire dans l'image hyperfréquence.

Ainsi, lors du balayage d'un corps ou d'un objet, on enregistre successivement les différents pixels destinés à former l'image hyperfréquence du corps ou objet balayé.

Les pixels déjà affichés deviennent ainsi plus petits au fur et à mesure du balayage, et sont redisposés dans l'image en fonction de la position des pixels supplémentaires ajoutés.

Préférentiellement, le balayage des points d'un corps ou objet par la zone de détection comprend un balayage manuel.

Préférentiellement, le procédé comprend également, avant les étapes de formation progressive de ladite image hyperfréquence, une étape d'initialisation dans laquelle on mesure les rayonnements émis dans la zone de détection pour obtenir une première valeur du premier signal, et on forme un premier pixel dans l'image hyperfréquence avec ladite valeur du premier signal.

Préférentiellement, on arrête le balayage des points du corps ou objet lorsque l'image hyperfréquence formée représente la partie du corps ou objet souhaitée.

### Brève description des dessins

L'invention et ses avantages seront mieux compris à la lecture de la description détaillée de trois modes de réalisation particuliers, pris à titre d'exemples nullement limitatifs et illustrés par les dessins annexés sur lesquels :
- la figure **1** est une vue schématique d'un premier mode de réalisation d'un dispositif d'imagerie selon l'invention,
- la figure **2** est une vue schématique d'un deuxième mode de réalisation d'un dispositif d'imagerie selon l'invention,
- la figure **3** est une vue schématique d'un troisième mode de réalisation d'un dispositif d'imagerie selon l'invention,
- les figures **4A** à **4D** représentent les images hyperfréquences successives formées et éventuellement affichées selon l'invention, lors d'un balayage, et
- la figure **5** représente un exemple d'organigramme d'un mode de mise en oeuvre d'un procédé selon l'invention.

### Description détaillée de l'invention

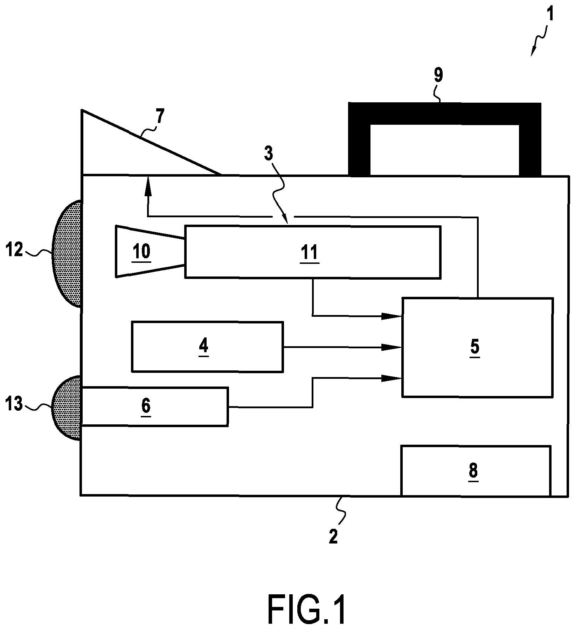

La figure **1** illustre de manière schématique un premier exemple de mode de réalisation d'un dispositif d'imagerie **1** selon l'invention.

Dans le premier mode de réalisation, le dispositif d'imagerie **1** comprend un bâti **2** avec un récepteur **3,** un moyen de mesure du déplacement **4** et une unité de traitement **5.** Le dispositif d'imagerie **1** comprend également une caméra **6** apte à détecter des rayonnements dans le domaine visible et un moyen d'affichage **7** pour afficher l'image de l'objet balayé. Enfin, le dispositif d'imagerie comprend une batterie **8** et une poignée **9** permettant de le rendre autonome et portable, pour un usage aisé et rapide.

Le capteur **3** est un capteur hyperfréquence. Le capteur **3** peut être un capteur actif ou passif. En particulier, le capteur **3** peut être un capteur passif radiométrique mesurant un signal de bruit gaussien correspondant au rayonnement émis par les corps dont la température est différente de zéro degré kelvin. Alternativement, le capteur **3** peut être un capteur actif dans lequel un signal est émis en direction du corps, par exemple un signal de bruit, afin d'augmenter la sensibilité et/ou la précision de la mesure effectuée par le capteur **3.** Alternativement, le capteur **3** peut être un capteur actif dans lequel un signal périodique connu est émis en direction du corps et dans lequel le capteur détermine les différences d'amplitude et de phase du signal mesuré par rapport au signal émis.

Dans l'exemple décrit ci-après, nous considérons que le capteur **3** est un capteur radiométrique ou radiomètre. Le capteur **3** comprend notamment une antenne **10** pour capter les rayonnements à détecter, et un récepteur **11** traitant les rayonnements captés par l'antenne et délivrant un premier signal représentatif desdits rayonnements. De manière facultative, une optique **12** spécifique au capteur radiométrique peut être prévue dans le dispositif d'imagerie, entre l'antenne et le corps ou objet à balayer.

Le récepteur **11** peut présenter différentes architectures selon la technologie retenue et/ou la précision de mesure voulue.

Pour un radiomètre à puissance totale, qui présente l'architecture de traitement la plus simple, le signal émis par le corps ou objet et collecté par l'antenne **10** est amplifié par un amplificateur à faible bruit LNA (en anglais : « low noise amplifier »). Le signal amplifié est traité par un filtre passe-bande puis par un détecteur quadratique permettant de transformer la puissance du signal amplifié et filtré en une tension quasi-continue. La tension est alors lissée par un intégrateur analogique ou numérique afin d'optimiser la sensibilité. Le radiomètre à puissance totale présente la meilleure sensibilité, par rapport aux autres radiomètres, car l'antenne est directement connectée à l'amplificateur, mais nécessite d'être calibré fréquemment afin de minimiser les variations de gain et de température de bruit.

Le radiomètre de Dicke permet de limiter le problème de stabilité dus aux variations de gain. Dans le radiomètre de Dicke, les variations de gain sont compensées par un calibrage périodique, à une fréquence donnée, à l'entrée du récepteur grâce à une charge de référence, assimilable à une source de bruit, qui est associée à un détecteur synchrone. Le radiomètre permet ainsi de mesurer la différence entre la température de l'antenne et la température équivalente de bruit de la charge de référence. La mesure du récepteur est effectuée alternativement, à la fréquence donnée, soit sur l'antenne soit sur la référence. La tension de sortie ne dépend alors plus de la température de bruit du système mais reste dépendante du gain de la chaîne, et la sensibilité du radiomètre est divisée par deux par rapport au radiomètre à puissance totale.

Le radiomètre à addition de bruit permet également de diminuer l'impact des variations de gain. Le radiomètre à addition de bruit comprend un coupleur directionnel monté entre l'antenne et l'amplificateur LNA, le coupleur directionnel permettant l'injection de bruit issu d'une référence commandée à une fréquence donnée. La mesure du récepteur est effectuée alternativement, à la fréquence donnée, avec ou sans bruit issu de la référence. La tension de sortie ne dépend alors plus du gain.

Le radiomètre à injection de bruit est une combinaison du radiomètre de Dicke et du radiomètre à addition de bruit. Le niveau de bruit injecté est ajusté par une boucle de contre-réaction, afin d'obtenir une tension en sortie du récepteur nulle.

Le radiomètre à deux références présente la particularité d'être peu sensible à la température équivalente de bruit du récepteur, et aux variations de gain et de sensibilité de détecteur. La radiomètre comprend deux références et un commutateur monté entre l'antenne et l'amplificateur LNA. Le commutateur permet de mesurer alternativement la température de l'antenne ou de l'une des deux références. Le radiomètre à deux références offre des performances nettement plus importantes que celles du radiomètre de Dicke, par un choix approprié des deux références.

Il existe enfin d'autres types d'architectures de radiomètre, telles que : les architectures à corrélation, interférométrique, à injection de bruit pulsé, de Hach, de Graham,... , et les combinaisons de ces architectures.

Quelle que soit l'architecture, le récepteur **11** peut être basé sur une détection homodyne ou hétérodyne.

Enfin, selon les cas, le récepteur **11** peut également comprendre une carte d'acquisition numérique permettant d'acquérir les données et de contrôler différents paramètres.

Le capteur **3** fournit alors un premier signal représentatif des rayonnements captés par l'antenne **10.** Le premier signal est transmis à l'unité de traitement **5** qui est reliée au capteur **3** par un moyen de connexion, dans le cas présent un câble de transmission de données (non-représenté).

Le moyen de mesure de déplacement **4** permet de mesurer les différents mouvements du bâti auquel il est monté solidaire, et donc de mesurer les différents mouvements du capteur **3.** Le moyen de mesure de déplacement **4** peut ainsi être une centrale inertielle. Une centrale inertielle peut comprendre trois accéléromètres, trois gyroscopes et trois magnétomètres, et permettre ainsi de mesurer les déplacements (translations et rotations) du bâti dans les trois directions de l'espace.

Le moyen de mesure de déplacement **4** fournit alors un deuxième signal représentatif du déplacement de la zone de détection du capteur **3.** Le deuxième signal est transmis à l'unité de traitement **5** qui est reliée au moyen de mesure du déplacement par un moyen de connexion, dans le cas présent un câble de transmission de données (non-représenté).

L'unité de traitement **5** reçoit le premier signal et le deuxième signal, et fournit, en sortie, une image hyperfréquence qui est transmise au moyen d'affichage **7.** L'image hyperfréquence est construite au fur et à mesure du balayage du corps ou de l'objet par la zone de détection du capteur **3.** Plus précisément, à chaque déplacement déterminé de la zone de détection est associée, par l'unité de traitement une valeur du premier signal constituant un pixel de l'image hyperfréquence et ajouté, en fonction du déplacement déterminé, dans l'image hyperfréquence. La formation de l'image commence lorsque l'opérateur enclenche la détection du dispositif d'imagerie ; puis l'opérateur balaye le corps ou objet à vérifier et la formation de l'image se termine lorsque l'opérateur arrête la détection du dispositif d'imagerie. On comprend donc que l'image hyperfréquence se forme progressivement : au début, l'image hyperfréquence ne comprend qu'un seul pixel (correspondant à la première valeur du premier signal) puis des pixels supplémentaires viennent s'ajouter et compléter l'image hyperfréquence jusqu'à l'arrêt du balayage. L'image hyperfréquence est alors formée par les différents pixels ajoutés.

En considérant que la période d'acquisition du capteur **7** soit de 200µs, alors un pixel est mesuré toutes les 200µs. En d'autres termes, l'opérateur peut déplacer très rapidement le dispositif d'imagerie pour reconstituer l'image de l'objet ou du corps balayé. En deux secondes, l'image peut comprendre jusqu'à 10 000 pixels. Si l'utilisateur repasse plusieurs fois sur la même zone du corps ou objet, alors les mesures de chaque pixel correspondant à ladite zone pourront être moyennées afin d'augmenter la sensibilité de la mesure. Ainsi, lorsque l'opérateur déplace le dispositif d'imagerie **1** afin de balayer une surface, un pixel supplémentaire peut être affiché toutes les 200µs ; si le déplacement est lent, alors plusieurs pixels successifs peuvent correspondre à la même zone du corps ou de l'objet balayé, et les valeurs des pixels peuvent être moyennées pour réduire le rapport signal sur bruit.

L'évolution de l'image hyperfréquence peut ainsi être transmise au moyen d'affichage **7** afin d'être affichée et de permettre à l'opérateur de visualiser la partie du corps ou objet déjà balayée.

La résolution spatiale du dispositif d'imagerie **1** est alors liée à la tâche d'Airy du capteur. Le rayon de la tâche d'Airy est inversement proportionnel à l'ouverture de l'optique du capteur **3.** Ainsi, en considérant une ouverture D de 10 cm, une fréquence du capteur d'environ 90 GHz, on obtient alors un rayon pour la tâche d'Airy d'environ 4 cm, pour une distance de 1 m entre le corps ou objet et le capteur **3.** Plus précisément, deux objets sont discernables s'ils sont distants de 4 cm.

Ainsi, en considérant des pixels de côtés égaux au rayon de la tâche d'Airy, l'opérateur peut paramétrer le dispositif d'imagerie **1** de manière à ce qu'un déplacement déterminé de la zone de détection inférieur à la moitié du rayon de la tâche d'Airy soit moyenné avec le dernier pixel enregistré, et qu'un déplacement déterminé de la zone de détection supérieur à la moitié du rayon de la tâche d'Airy soit moyenné avec le pixel suivant dont la position par rapport au pixel précédent correspond à une distance égale au rayon de la tâche d'Airy.

Le balayage peut s'effectuer de manière libre par l'opérateur, pour autant que le moyen de mesure de déplacement **4** soit capable d'identifier le mouvement du balayage. Ainsi, selon une première mise en oeuvre du balayage, l'opérateur peut déplacer le dispositif d'imagerie **1**, et donc le capteur **3,** dans un plan parallèle à la surface du corps ou objet à balayer. Dans ce cas, le deuxième signal fourni par le moyen de mesure du déplacement correspond à un mouvement de translation, et l'image hyperfréquence obtenue aura alors la forme de la trajectoire parcourue par le dispositif d'imagerie dans le plan parallèle à la surface de l'objet ou corps balayé.

Alternativement, l'opérateur peut garder le dispositif d'imagerie 1 à une position donnée, et balayer le corps ou objet par simple mouvement du poignet. Dans ce cas, les informations transmises par le moyen de mesure du déplacement 4 correspondront à la fois à des mouvements de rotation et éventuellement de translation si le capteur n'est pas disposé sur un des axes de rotation. Par ailleurs, afin de connaître la taille des surfaces balayées successivement par le capteur **3,** le dispositif d'imagerie **1** peut également comprendre un capteur de distance (non-représenté) permettant de déterminer la distance entre le dispositif d'imagerie **1** et le corps ou objet balayé. Le capteur de distance peut être un capteur infra-rouge ou un capteur de distance intégré à la caméra **6.**

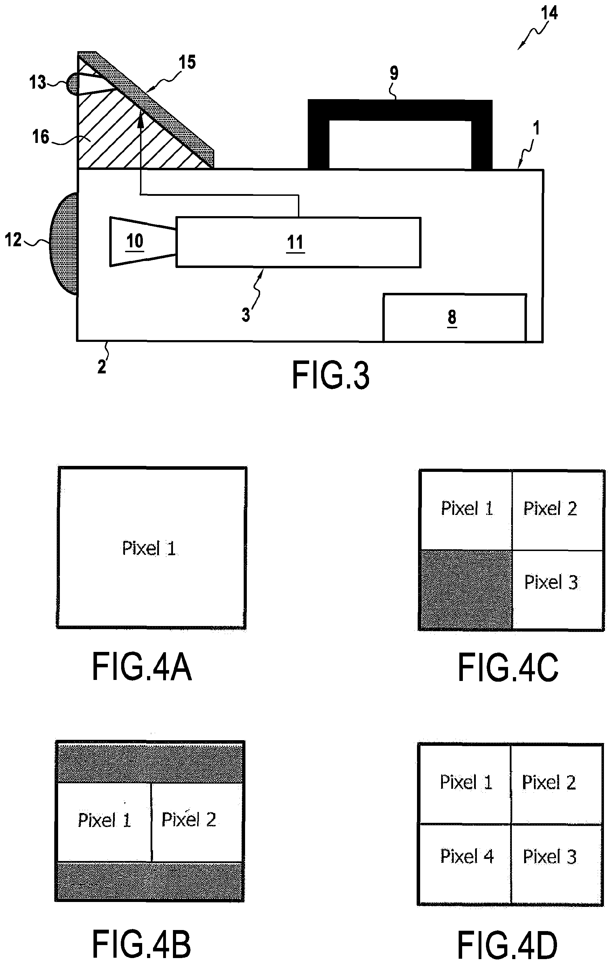

Par exemple, un balayage décrivant un carré donnera successivement, sur un écran d'affichage, les images hyperfréquences illustrées aux figures **4A** à **4D**. Sur la figure **4A**, l'image hyperfréquence est formée d'un seul pixel (pixel 1) qui est représenté sur l'écran d'affichage, par exemple sur l'intégralité de l'écran d'affichage. Sur la figure **4B**, l'image hyperfréquence est formée des deux premiers pixels (pixel 1 et pixel 2) qui sont représentés sur l'écran d'affichage. Puis, l'image hyperfréquence est formée de trois pixels qui sont affichés (pixel 1, pixel 2 et pixel 3), le reste de l'écran d'affichage étant « inactif ». Enfin, à la figure **4D**, le balayage est terminé et l'écran affiche les quatre pixels (pixel 1, pixel 2, pixel 3, pixel 4) représentant l'intégralité du corps ou objet balayé et formant l'image hyperfréquence finale.

Alternativement, si un opérateur balaye un corps ou un objet en déplaçant la zone de détection du capteur de manière à former un « Z » sur le corps ou objet à balayer, alors les pixels de l'image hyperfréquence seront disposés dans l'image hyperfréquence de manière à former également un « Z » (le reste de l'écran étant inactif).

Enfin, afin d'améliorer la détection d'objets sur le corps balayé, et de protéger l'intimité de la personne balayée, le dispositif d'imagerie **1** comprend la caméra **6** apte à capter les rayonnements dans le domaine visible. La caméra **6** peut être une caméra classique, formée de cellules photosensibles telles qu'on peut en trouver dans les appareils photo numériques. Une optique **13** peut être prévue dans le dispositif d'imagerie **1**, devant l'objectif de la caméra **6**, afin d'améliorer les propriétés optiques de la caméra. Les signaux issus de la caméra sont transmis à l'unité de traitement **5** qui est reliée à la caméra par un moyen de connexion, dans le cas présent un câble de transmission de données (non-représenté). L'unité de traitement peut alors superposer les images obtenues avec le capteur **3** et avec la caméra **6** afin d'obtenir une image plus complète et plus facilement analysable pour l'opérateur.

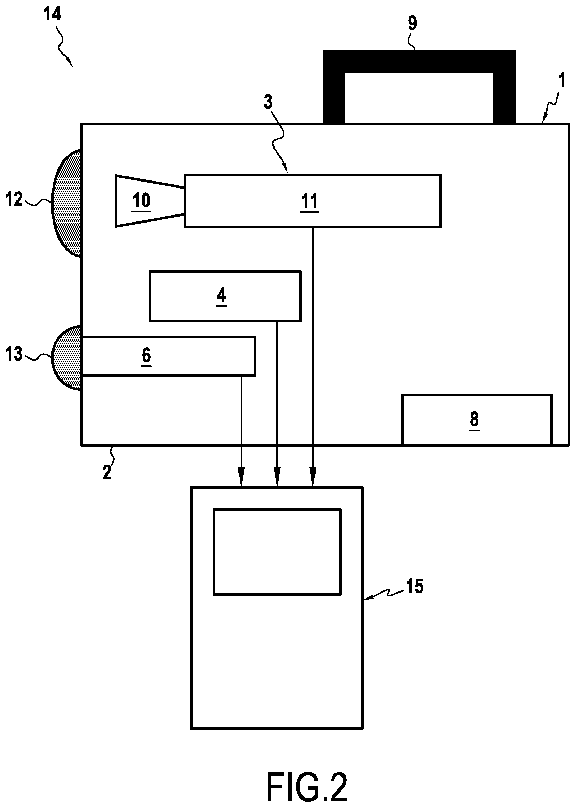

La figure **2** représente un deuxième mode de réalisation de l'invention dans lequel les références identiques à la figure **1** désignent les mêmes éléments. La figure **2** représente un système d'imagerie **14** comprenant un dispositif d'imagerie **1.** Dans le système d'imagerie **14**, l'unité de traitement, et éventuellement le moyen d'affichage, ne sont plus montés dans le bâti **2** du dispositif d'imagerie **1** mais sont intégrés dans un dispositif externe **15**, connecté au dispositif d'imagerie **1**, par exemple un ordinateur.

Le dispositif d'imagerie **1** comprend ainsi un moyen de connexion pour connecter le dispositif d'imagerie **1** au dispositif externe **15.** Le moyen de connexion peut être un câble de transmission de données, ou bien une liaison sans fil permettant de communiquer des données entre le dispositif d'imagerie **1** et le dispositif externe **15.** Dans le cas du mode de réalisation représenté à la figure **2**, le dispositif externe **15** permet de traiter le premier signal et le deuxième signal fournis par le moyen de mesure de déplacement **4** et le capteur **3,** ainsi que le signal issu de la caméra, et de fournir l'image hyperfréquence. Le dispositif externe **15** peut également comprendre un moyen d'affichage, par exemple un écran, permettant de visualiser l'image hyperfréquence. Alternativement, le dispositif externe **15** peut comprendre un moyen de connexion pour transmettre l'image hyperfréquence à un moyen d'affichage monté intégré dans le dispositif d'imagerie **1.**

La figure **3** représente un troisième mode de réalisation de l'invention dans lequel les références identiques aux figures **1** et **2** désignent les mêmes éléments. La figure **3** représente un système d'imagerie **14** comprenant un dispositif d'imagerie **1** et un dispositif externe **15**, par exemple un ordiphone ou un dispositif électronique tel qu'une tablette, disposé sur le dispositif d'imagerie **1.** Dans le système d'imagerie **14**, l'unité de traitement, le moyen de mesure de déplacement, la caméra et le moyen d'affichage ne sont plus montés dans le bâti **2** du dispositif d'imagerie **1** mais sont intégrés dans le dispositif externe **15.**

En particulier, le dispositif externe **15** étant solidaire du bâti **2** du dispositif d'imagerie **1** pendant un balayage, le moyen de mesure du déplacement intégré dans le dispositif externe **15** est apte à déterminer le déplacement du capteur **3.** Pour connaître la position exacte du dispositif externe **15** par rapport au capteur **3,** un support **16** peut être prévu sur le bâti **2**, afin de positionner de manière unique et connue le dispositif externe **15** sur le bâti **2.** Le support **16** peut également comprendre le moyen de connexion permettant de relier le dispositif d'imagerie **1** au dispositif externe **15**, ainsi qu'un guide optique, par exemple associé à l'optique **13**, permettant d'utiliser la caméra du dispositif externe **15** pour capter les rayonnements visibles de la zone de détection.

Dans le cas du mode de réalisation représenté à la figure **3**, le dispositif externe **15** permet de traiter le premier signal fourni par le capteur **3**, et mesure lui-même le déplacement et éventuellement les rayonnements visibles de la zone de détection, pour ensuite traiter les données et former l'image hyperfréquence. Le dispositif externe **15** peut également comprendre un moyen d'affichage, par exemple l'écran tactile de l'ordiphone, permettant de visualiser l'image hyperfréquence.

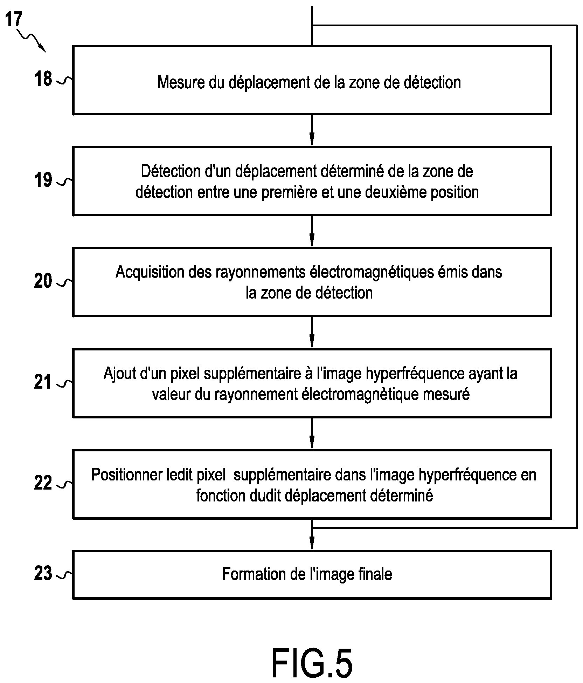

La figure **5** représente un organigramme d'un exemple de mise en oeuvre d'un procédé d'imagerie **17** selon l'invention. Le procédé d'imagerie **17** comprend ainsi une première étape **18** de mesure du déplacement de la zone de détection. Dans une deuxième étape **19**, le procédé détecte un déplacement déterminé entre une première position et deuxième position et fait une acquisition, dans une troisième étape **20**, des rayonnements électromagnétiques émis dans la zone de détection. On ajoute alors, dans une quatrième étape **21**, un pixel supplémentaire à l'image hyperfréquence, le pixel supplémentaire ayant la valeur obtenue lors de l'acquisition de l'étape **20.** Le pixel supplémentaire est ensuite placé dans l'image hyperfréquence en fonction du déplacement déterminé à l'étape **19,** lors d'une cinquième étape **22.**

Certaines des étapes **18** à **20** peuvent être réalisées dans un ordre différent ou en même temps, selon le mode de mise en oeuvre choisi.

Le procédé **17** recommence ensuite à l'étape **18**, jusqu'à ce que le balayage du corps ou de l'objet soit fini. Les différents pixels obtenus permettent ainsi d'obtenir, à l'étape **23**, une image hyperfréquence finale.

Ainsi, l'objet selon l'invention permet d'obtenir facilement, à l'aide d'un dispositif portable, notamment d'une seule main, une image hyperfréquence d'un objet ou d'un corps pouvant présenter un risque. Le dispositif d'imagerie permet également de centrer le balayage sur une zone bien spécifique du corps ou de l'objet, limitant ainsi la durée du balayage et le temps de traitement de l'image.

## Revendications

1. Dispositif d'imagerie portable (1), comprenant un bâti (2) et au moins un capteur hyperfréquence (3), de préférence radiométrique, monté dans le bâti (2), le capteur hyperfréquence (3) étant configuré pour capter des rayonnements électromagnétiques émis ou réfléchis par un corps ou objet dans une zone de détection du capteur hyperfréquence, et pour les transformer en un premier signal représentatif desdits rayonnements,
**caractérisé en ce que** le dispositif (1) comprend également :
- un premier moyen de connexion pour connecter le dispositif d'imagerie à un moyen de mesure de déplacement (4), le moyen de mesure de déplacement (4) étant configuré pour délivrer un deuxième signal représentatif du déplacement de la zone de détection, et
- un deuxième moyen de connexion pour connecter le dispositif d'imagerie à une unité de traitement (5), l'unité de traitement (5) recevant en entrée le premier signal et le deuxième signal, et étant configurée pour former, et éventuellement afficher sur un afficheur (7), une image hyperfréquence constituée par des pixels,
et **en ce que**, lors d'un déplacement du bâti (2) pour balayer des points d'un corps ou objet par la zone de détection, l'unité de traitement (5) est configurée pour former, et éventuellement afficher, de manière itérative, ladite image hyperfréquence en :
- détectant, à partir du deuxième signal, un déplacement déterminé de la zone de détection entre une première position et une deuxième position,
- ajoutant un pixel supplémentaire dans l'image hyperfréquence, positionné par rapport au pixel précédent en fonction dudit déplacement détecté, et
- donnant audit pixel supplémentaire une valeur du premier signal déterminée lorsque la zone de détection est dans la deuxième position
l'unité de traitement est configurée pour modifier la taille, et éventuellement la position, des pixels de l'image, lors d'ajout d'un pixel supplémentaire dans l'image hyperfréquence.

2. Dispositif selon la revendication **1** comprenant entre un et dix capteurs hyperfréquences (3).

3. Dispositif selon la revendication **2** comprenant un unique capteur hyperfréquence (3).

4. Dispositif selon l'une quelconque des revendications **1** à **3** dans lequel le moyen de mesure de déplacement (4) comprend une centrale inertielle.

5. Dispositif selon l'une quelconque des revendications **1** à **4** dans lequel le deuxième signal correspond à un déplacement du capteur (3), et notamment d'une antenne de détection (10) du capteur (3).

6. Dispositif selon l'une quelconque des revendications **1** à **5** dans lequel le bâti (2) comprend également une caméra (6) configurée pour capter les rayonnements visibles émis ou réfléchis dans la zone de détection et pour les transformer en un troisième signal représentatif desdits rayonnements, et dans lequel l'unité de traitement (5) est configurée pour : former une image visible correspondant au troisième signal, superposer l'image hyperfréquence et l'image visible, et éventuellement modifier une partie de ladite image hyperfréquence.

7. Dispositif selon l'une quelconque des revendications **1** à **6** dans lequel l'unité de traitement (5) est montée dans le bâti (2).

8. Dispositif selon l'une quelconque des revendications **1** à **7** dans lequel le moyen de mesure de déplacement (4) est monté dans le bâti (2).

9. Système d'imagerie (14) comprenant un dispositif d'imagerie (1) selon l'une quelconque des revendications **1** à **6,** une unité de traitement et un moyen de mesure du déplacement du capteur.

10. Système d'imagerie (14) selon la revendication **9** dans lequel le moyen de mesure du déplacement du capteur et/ou l'unité de traitement est monté dans un ordinateur (15), éventuellement portable, ou un téléphone portable (15).

11. Procédé d'imagerie hyperfréquence à balayage (17) comprenant :
- une étape (20) d'acquisition de rayonnements électromagnétiques hyperfréquences émis par un corps ou objet dans une zone de détection, pour délivrer un premier signal représentatif desdits rayonnements,
- une étape (18) de mesure de déplacement pour délivrer un deuxième signal représentatif du déplacement de la zone de détection,
- une étape (23) de formation, à partir du premier signal et du deuxième signal, d'une image hyperfréquence constituée par des pixels, destinée à être affichée par un afficheur, dans lequel, pendant un balayage des points d'un corps ou objet par la zone de détection, on forme, et éventuellement affiche, progressivement, de manière itérative, ladite image hyperfréquence en :
- détectant, à partir du deuxième signal, un déplacement (19) déterminé de la zone de détection entre une première position et une deuxième position,
- ajoutant un pixel supplémentaire (21) dans l'image hyperfréquence, positionné par rapport au pixel précédent en fonction dudit déplacement détecté, et
- donnant audit pixel supplémentaire une valeur (22) du premier signal lorsque la zone de détection est dans la deuxième position
et dans lequel on modifie la taille, et éventuellement la position, des pixels de l'image, lors d'ajout d'un pixel supplémentaire dans l'image hyperfréquence.

12. Procédé d'imagerie (17) selon la revendication précédente dans lequel le balayage des points d'un corps ou objet par la zone de détection comprend un balayage manuel.

13. Procédé d'imagerie (17) selon la revendication **11** ou **12** comprenant également, avant les étapes de formation progressive de ladite image hyperfréquence, une étape d'initialisation dans laquelle on mesure les rayonnements émis dans la zone de détection pour obtenir une première valeur du premier signal, et on forme un premier pixel dans l'image hyperfréquence avec ladite valeur du premier signal.

14. Procédé d'imagerie (17) selon l'une quelconque des revendications **11** à **13** dans lequel on arrête le balayage des points du corps ou objet lorsque l'image hyperfréquence formée représente la partie du corps ou objet souhaitée.

## Patentansprüche

1. Tragbare Bildgebungsvorrichtung (1), die einen Rahmen (2) und zumindest einen vorzugsweise radiometrischen Mikrowellen-Sensor (3) umfasst, der in dem Rahmen (2) montiert ist, wobei der Mikrowellen-Sensor (3) dazu ausgestaltet ist, elektromagnetische Strahlen zu erfassen, die von einem Körper oder Gegenstand in einer Erfassungszone des Mikrowellen-Sensors ausgestrahlt oder reflektiert werden, und diese in ein erstes Signal umzuwandeln, das die Strahlen darstellt, **dadurch gekennzeichnet, dass** die Vorrichtung (1) ebenfalls umfasst:
- ein erstes Verbindungsmittel, um die Bildgebungsvorrichtung mit einem Mittel zur Bewegungsmessung (4) zu verbinden, wobei das Mittel zur Bewegungsmessung (4) dazu ausgestaltet ist, ein zweites Signal zu liefern, das die Bewegung der Erfassungszone darstellt, und
- ein zweites Verbindungsmittel, um die Bildgebungsvorrichtung mit einer Verarbeitungseinheit (5) zu verbinden, wobei die Verarbeitungseinheit (5) das erste Signal und das zweite Signal als Eingang empfängt und dazu ausgestaltet ist, ein aus Pixeln bestehendes Mikrowellen-Bild zu erstellen und eventuell auf einer Anzeige (7) anzuzeigen,
und dass, während einer Bewegung des Rahmens (2), um die Punkte eines Körpers oder Gegenstands durch die Erfassungszone abzutasten, die Verarbeitungseinheit (5) dazu ausgestaltet ist, wiederholt das Mikrowellen-Bild zu erstellen und eventuell anzuzeigen, indem:
- aus dem zweiten Signal eine bestimmte Bewegung der Erfassungszone zwischen einer ersten Position und einer zweiten Position erfasst wird,
- ein zusätzliches Pixel in das Mikrowellen-Bild eingefügt wird, das in Bezug auf das vorhergehende Pixel als Funktion der erfassten Bewegung positioniert wird, und
- dem zusätzlichen Pixel ein Wert des ersten Signals gegeben wird, der bestimmt wird, wenn die Erfassungszone in der zweiten Position ist,
wobei die Verarbeitungseinheit dazu ausgestaltet ist, bei der Einfügung eines zusätzlichen Pixels in das Mikrowellen-Bild die Größe und eventuell die Position der Pixel des Bildes zu modifizieren.

2. Vorrichtung nach Anspruch 1, die zwischen einem und zehn Mikrowellen-Sensoren (3) umfasst.

3. Vorrichtung nach Anspruch 2, die einen einzigen Mikrowellen-Sensor (3) umfasst.

4. Vorrichtung nach einem der Ansprüche 1 bis 3, wobei das Mittel zur Bewegungsmessung (4) eine inertiale Messeinheit umfasst.

5. Vorrichtung nach einem der Ansprüche 1 bis 4, wobei das zweite Signal einer Bewegung des Sensors (3), und insbesondere einer Erfassungsantenne (10) des Sensors (3) entspricht.

6. Vorrichtung nach einem der Ansprüche 1 bis 5, wobei der Rahmen (2) auch eine Kamera (6) umfasst, die dazu ausgestaltet ist, die sichtbaren Strahlen zu erfassen, die in der Erfassungszone ausgestrahlt oder reflektiert werden, und sie in ein drittes Signal umzuwandeln, das die Strahlen darstellt, und wobei die Verarbeitungseinheit (5) dazu ausgestaltet ist: ein sichtbares Bild entsprechend dem dritten Signal zu erstellen, das Mikrowellen-Bild und das sichtbare Bild übereinanderzulegen und eventuell einen Teil des Mikrowellen-Bildes zu modifizieren.

7. Vorrichtung nach einem der Ansprüche 1 bis 6, wobei die Verarbeitungseinheit (5) in dem Rahmen (2) montiert ist.

8. Vorrichtung nach einem der Ansprüche 1 bis 7, wobei das Mittel zur Bewegungsmessung (4) in dem Rahmen (2) montiert ist.

9. Bildgebungssystem (14), das eine Bildgebungsvorrichtung (1) nach einem der Ansprüche 1 bis 6, eine Verarbeitungseinheit und ein Mittel zur Messung der Bewegung des Sensors umfasst.

10. Bildgebungssystem (14) nach Anspruch 9, wobei das Mittel zur Messung der Bewegung des Sensors und/oder die Verarbeitungseinheit in einem eventuell tragbaren Computer (15) oder einem tragbaren Telefon (15) montiert sind.

11. Verfahren zur Abtastungs-Mikrowellen-Bildgebung (17), umfassend:
- einen Schritt (20) zur Erfassung von elektromagnetischen Mikrowellen-Strahlen, die von einem Körper oder Gegenstand in einer Erfassungszone ausgestrahlt oder reflektiert werden, um ein erstes Signal zu liefern, das die Strahlen darstellt,
- einen Schritt (18) zur Bewegungsmessung, um ein zweites Signal zu liefern, das die Bewegung der Erfassungszone darstellt,
- einen Schritt (23) zur Erstellung eines aus Pixeln bestehenden Mikrowellen-Bildes, das dazu bestimmt ist, von einer Anzeige angezeigt zu werden, aus dem ersten Signal und dem zweiten Signal, wobei während einer Abtastung der Punkte eines Körpers oder Gegenstands durch die Erfassungszone das Mikrowellen-Bild wiederholt progressiv erstellt und eventuell angezeigt wird, indem:
- aus dem zweiten Signal eine bestimmte Bewegung (19) der Erfassungszone zwischen einer ersten Position und einer zweiten Position erfasst wird,
- ein zusätzliches Pixel (21) in das Mikrowellen-Bild eingefügt wird, das in Bezug auf das vorhergehende Pixel als Funktion der erfassten Bewegung positioniert wird, und
- dem zusätzlichen Pixel ein Wert (22) des ersten Signals gegeben wird, wenn die Erfassungszone in der zweiten Position ist,
und wobei bei der Einfügung eines zusätzlichen Pixels in das Mikrowellen-Bild die Größe und eventuell die Position der Pixel des Bildes modifiziert werden.

12. Verfahren zur Bildgebung (17) nach dem vorhergehenden Anspruch, wobei die Abtastung der Punkte eines Körpers oder Gegenstands durch die Erfassungszone eine manuelle Abtastung umfasst.

13. Verfahren zur Bildgebung (17) nach Anspruch 11 oder 12, das auch, vor den Schritten zur progressiven Erstellung des Mikrowellen-Bildes, einen Schritt zur Initialisierung umfasst, in welchem die Strahlen, die in der Erfassungszone ausgestrahlt werden, gemessen werden, um einen ersten Wert des ersten Signals zu erhalten, und ein erstes Pixel in dem Mikrowellen-Bild mit dem Wert des ersten Signals erstellt wird.

14. Verfahren zur Bildgebung (17) nach einem der Ansprüche 11 bis 13, wobei die Abtastung der Punkte des Körpers oder Gegenstandes angehalten wird, wenn das erstellte Mikrowellen-Bild den gewünschten Teil des Körpers oder Gegenstandes darstellt.

## Claims

1. A portable imaging device (1) comprising a housing (2) and at least one microwave sensor (3), preferably a radiometric sensor, mounted in the housing (2), the microwave sensor (3) being configured to pick up electromagnetic radiation emitted or reflected by a body or an item in a detection zone of the microwave sensor, and to transform it into a first signal that is representative of said radiation;
the device (1) being **characterized in that** it also comprises:
• first connection means for connecting the imaging device to movement measuring means (4), the movement measuring means (4) being configured to deliver a second signal that is representative of the movement of the detection zone; et
• second connection means for connecting the imaging device to a processor unit (5), the processor unit (5) receiving, as input, the first signal and the second signal, and being configured to form, and possibly display on a display (7), a microwave image that is constituted by pixels; and
**in that**, during movement of the housing (2) in order to cause the detection zone to scan points of a body or an item, the processor unit (5) is configured to act in iterative manner to form, and possibly display, said microwave image by:
• detecting, from the second signal, a determined movement of the detection zone between a first position and a second position;
• adding an additional pixel to the microwave image, which pixel is positioned relative to the preceding pixel as a function of said detected movement; and
• giving said additional pixel a value of the first signal as determined when the detection zone is in the second position
The processor unit being configured to modify the size, and possibly the position, of the pixels of the image, while adding an additional pixel to the microwave image.

2. A device according to claim 1, including one to ten microwave sensors (3).

3. A device according to claim 2, including a single microwave sensor (3).

4. A device according to any one of claims 1 to 3, wherein the movement measuring means (4) comprise an inertial unit.

5. A device according to any one of claims 1 to 4, wherein the second signal corresponds to a movement of the sensor (3), and in particular of a detection antenna (10) of the sensor (3).

6. A device according to any one of claims 1 to 5, wherein the housing (2) also includes a camera (6) that is configured to pick up the visible radiation emitted by or reflected from the detection zone, and in order to transform it into a third signal that is representative of said radiation, and wherein the processor unit (5) is configured to: form a visible image corresponding to the third signal; superpose the microwave image and the visible image; and possibly modify a portion of said microwave image.

7. A device according to any one of claims 1 to 6, wherein the processor unit (5) is mounted in the housing (2) .

8. A device according to any one of claims 1 to 7, wherein the movement measuring means (4) are mounted in the housing (2).

9. An imaging system (14) comprising an imaging device (1) according to any one of claims 1 to 6, a processor unit, and movement measuring means for measuring the movement of the sensor.

10. An imaging system (14) according to claim 9, wherein the processor unit and/or the movement measuring means for measuring the movement of the sensor is/are mounted in a computer (15), possibly a laptop computer, or a mobile telephone (15).

11. A microwave-imaging scanning method (17) comprising:
• an acquisition step (20) for acquiring microwave electromagnetic radiation emitted by a body or an item in a detection zone, so as to deliver a first signal that is representative of said radiation;
• a movement measuring step (18) for delivering a second signal that is representative of the movement of the detection zone; and
• a formation step (23) for taking both the first signal and the second signal and forming therefrom a microwave image constituted by pixels, for displaying by a display;
wherein, while using the detection zone to scan points of a body or an item, the method comprises acting progressively and in iterative manner to form, and possibly display, said microwave image by:
• detecting, from the second signal, a determined movement (19) of the detection zone from a first position to a second position;
• adding an additional pixel (21) to the microwave image, positioned relative to the preceding pixel as a function of said detected movement; and
• giving said additional pixel a value (22) of the first signal when the detection zone is in the second position
and wherein the size, and possibly the position, of the pixels of the image are modified, while adding an additional pixel to the microwave image.

12. An imaging method (17) according to the preceding claim, wherein the detection zone is caused to scan points of a body or an item by being moved manually.

13. An imaging method (17) according to claim 11 or claim 12, wherein, before the steps of progressively forming said microwave image, the method also comprises an initialization step in which the radiation emitted in the detection zone is measured so as to obtain a first value of the first signal, and a first pixel is formed in the microwave image with said value of the first signal.

14. An imaging method (17) according to any one of claims 11 to 13, wherein the scanning of points of the body or the item is stopped when the microwave image as formed shows the desired portion of the body or the item.
